# EUROPEAN PATENT SPECIFICATION

(11) **EP 4 289 747 B1**
(45) Date of publication and mention of the grant of the patent: **26.02.2025**
(21) Application number: 23176450.7
(22) Date of filing: 31.05.2023
(51) Int. Cl.: B64F 1/18, B64U 70/95, G09F 9/30, G08G 5/00, G08G 5/02

(54) **ACTIVE LANDING MARKER**
AKTIVER LANDEMARKIERER
MARQUEUR ACTIF DE PALIER D'ATTERRISSAGE

(30) Priority: 09.06.2022 IN 202211033013; 29.07.2022 US 202217877248
(43) Date of publication of application: 13.12.2023
(73) Proprietor: Honeywell International Inc., Charlotte, NC 28202 (US)
(72) Inventor: TEJASVI, P R Nagananda, Charlotte, 28202 (US); HIREMATH, Irayya, Charlotte, 28202 (US)
(74) Representative: Haseltine Lake Kempner LLP

(56) References cited:
- WO-A1-2016/196093
- US-A1- 2014 070 052
- US-A1- 2016 122 038
- US-A1- 2021 356 572
- US-B1- 10 395 544
- US-B1- 11 231 706
- ANONYMOUS: "Liquid-crystal display - Wikipedia", 31 May 2022 (2022-05-31), XP093086694, Retrieved from the Internet <URL:https://en.wikipedia.org/w/index.php?title=Liquid-crystal_display&oldid=1090856663> [retrieved on 20230928]

## Description

### CROSS-REFERENCE TO RELATED APPLICATIONS

This application claims priority to Indian Provisional Application No. 202211033013 filed on June 9, 2022 and titled "ACTIVE LANDING MARKER".

### BACKGROUND

The Federal Aviation Administration (FAA) has approved Visual Flight Rules (VFR) for Urban Air Mobility (UAM) Operations. Precision landings are fundamental to all aircrafts including UAM/Drones/electric vertical take-off and landing (eVTOL) vehicles. Autonomous precision landings guided by marker-based landings (MBLs) for UAM/drones/eVTOL vehicles under VFR require clear day light conditions. With MBLs, markers with unique patterns are used to identify a landing site and provide guidance references for the vehicle to land. An example of a unique pattern is an Augmented Reality University of Cordoba (ArUco) pattern.

Typically, printed landing markers of different dimensions and patterns are positioned in relation to each other at a landing site. Once a camera of a vehicle, capturing images in real time, captures an image of landing markers, and the identity is verified, a MBL algorithm is used by the vehicle to start and control decent to the landing site or landing pad. The MBL algorithm provides real-time position estimates used by the vehicle to control the decent. For example, based on images of the landing markers, the MBL algorithm may use Euler angles in a north-east-down (NED) coordinate system and a global positioning attitude heading reference system (GPAHRS) sensor fusion system to enable vertical and horizontal correction of the vehicle in achieving a precision landing of the vehicle.

Precision landings are fundamental to all aircrafts including UAM/Drones/eVTOL vehicles. With these types of unmanned vehicles, not having the ability to clearly detect the landing markers hinders the ability to perform precise landings at a designated landing site. Not being able to clearly detect the landing markers may be due to environmental conditions such as dusk, dawn, night, smog, fog, snow, rain, etc.

Further, it is anticipated that UAM Operations will be required to also be operated with digital flight rules (DFR) which include the VFR and instrument flight rules (IFR). The objective of DFR is to provide safe and unfettered access to the airspace to all participating vehicle operators under all visibility, all-weather conditions without incurring the limitations in operational flexibility inherent to IFR and even VFR.

For the reasons stated above and for other reasons stated below which will become apparent to those skilled in the art upon reading and understanding the present specification, there is a need for a landing marker that can be used during varying environmental conditions.

WO2016/196093 A1 relates to systems and methods for flexibly or selectively managing aerial drone parcel transfers. According to its abstract, an aerial drone parcel delivery / transfer management server (ADPTMS) is configured for facilitating flexible management of aerial drone parcel deliveries to or transfers between aerial drone landing pads (ADLPs). Each ADLP has a corresponding ADLP address that includes a unique ADLP identifier; current or most-recently known ADLP geolocation data; and possibly current or most-recently known ADLP elevation data. The ADPTMS can communicate with order management / fulfillment servers associated with online stores, which can communicate with aerial drone parcel delivery / transfer services for dispatching aerial drones to particular ADLP addresses as part of fulfilling online orders. An ADLP can present a machine readable code such as a quick response (QR) code thereon (e.g., on a landing mat) that can be captured by an aerial drone and processed to verify the ADLP's identity. An ADLP can output local RF guiding signals and/or local optical guiding signals (e.g., infrared signals) to aid aerial drone navigation to the ADLP.

US10395544 B1 relates to an electronic marker that may provide an approach notification to enable people to understand and interpret actions by a UAV, such as an intention to land or deposit a package at a particular location. According to its abstract, the marker may communicate a specific intention of the UAV and/or communicate a request to a person. The marker may monitor the person or data signals for a response from the person, such as movement of the person that indicates a response. The marker may be equipped with hardware and/or software configured to provide notifications and/or exchange information with a person or the UAV at or near a destination. The marker may include a display, lights, a speaker, and one or more sensors to enable the UAV to provide information, barcodes, and text. The marker can provide final landing authority and can "wave-off" the UAV if an obstacle or person exists in the landing zone.

US11231706 B1 relates to a delivery robot that may provide an approach notification to enable people to understand and interpret actions by an unmanned aerial vehicle (UAV), such as an intention to land or deposit a package at a particular location. According to its abstract, the delivery robot may include a display, lights, a speaker, and one or more sensors to enable the robot to provide information, barcodes, and text to the UAV and/or bystanders. The robot can provide final landing authority, and can "wave-off" the UAV, if an obstacle or person exists in the landing zone.

US2014/070052A1 relates to a method of providing a smart helipad configured to support landing of a vertical takeoff and landing aircraft. According to its abstract, the method includes adaptively displaying an imaged marker recognizable by a camera mounted to the vertical takeoff and landing aircraft; obtaining tilting information about a ground surface and a sea surface using a gyro sensor; and adjusting a landing pad connected to a display unit on which the marker is displayed to be in parallel with a horizontal line based on the tilting information, using a motion platform having change responsiveness to all of the directions.

### SUMMARY OF INVENTION

The present disclosure concerns an active landing marker as defined in claim 1 and a method of generating an active landing marker as defined in claim 8. Dependent claims define preferred embodiments.

The following summary is made by way of example and not by way of limitation. It is merely provided to aid the reader in understanding some of the aspects of the subject matter described. Embodiments provides an active landing marker that generates a unique pattern that can be clearly identified during different environmental conditions.

In one embodiment, an active landing marker including a housing, a cover panel, a marker panel and energy sources is provided. The cover panel is coupled to the housing, the cover panel made of polarized translucent material. The marker panel is positioned within the housing. The marker panel includes a plurality of selectively positioned energy absorbing sections and a plurality of energy transmission sections. The energy sources are contained within the housing. The marker panel being positioned between the energy sources and the cover panel. Energy radiated from the energy sources passing through the plurality of energy transmission sections of the marker panel and through the cover panel generating an active signal marker having a unique marker pattern. The active signal marker aiding in the landing of vehicles during varying environmental conditions by using a sensor configured to sense an environmental condition and a controller to selectively provide power to the energy sources and configured to switch between energy sources based on the current environmental condition.

In still another embodiment, a method of generating an active landing marker is provided. The method including determining a current environmental condition by at least one sensor, forming a unique pattern in a marker panel with a plurality of energy absorbing sections and a plurality of energy transmission sections; selectively providing power to a plurality of energy sources to generate energy that is absorbed by the energy absorbing sections and transmitted from the energy transmission sections; polarizing the transmitted energy to define the unique pattern with the transmitted energy that aids in the landing of vehicles during varying environmental conditions, and switching between energy sources based on the current environmental condition.

### BRIEF DESCRIPTION OF THE DRAWINGS

The present invention can be more easily understood and further advantages and uses thereof will be more readily apparent, when considered in view of the detailed description and the following figures in which:
Figure 1 is a block diagram of an active landing marker according to an example aspect of the present invention;
Figure 2 illustrates an example of a marker panel according to an example aspect of the present invention;
Figure 3 illustrates another block diagram of an active landing marker according to an example aspect of the present invention;
Figure 4 illustrates still another block diagram of an active landing marker according to an example aspect of the present invention;
Figure 5 illustrates yet another block diagram of active landing marker according to an example aspect of the present invention; and
Figure 6 illustrates a flow diagram of a process for generating an active landing marker according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims.

As discussed above, some current landing markers use printed markers. Printed landing markers are passive markers because they rely on ambient light that is reflected off of the markers to provide the identification of a unique identifier of the landing marker. Hence, passive landing markers typically can only be used during daylight landing operations when sufficient ambient light is present.

Embodiments provide self-contained active landing markers. The active landing markers enable use of a vehicle's MBL system in all visibility conditions without incurring the limitations in operational flexibility inherent to IFR and even VFR. In embodiments, radiated energy from an energy source is used to form a unique marker pattern that is used by a vehicle to identify and perform a precision landing of the vehicle in varying environmental conditions.

In one example, the unique marking pattern is made with a marker panel that includes absorbing sections that absorb the energy from the energy source and energy transmission sections that radiate the energy from the active landing marker. The radiated energy is detected by the systems on the vehicle. The pattern made by the energy identifies an associated landing site and provides a reference for a vehicle's MBL system to aid in accomplishing a precision landing at the landing site.

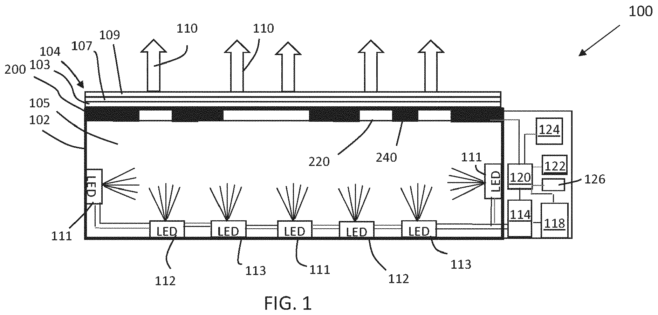

Figure 1 illustrates a block diagram of an active landing marker 100 of an example embodiment. The active landing marker 100 includes a housing 102. A cover panel 104 is used to form an enclosed cavity 105 with the housing 102. In one example, the cover panel 104 is made of a translucent material that radiates energy 110 from an energy source that is located within the cavity 105 of an active landing marker 100. In one example, the cover panel 104 is made of a polarizing material to radiate energy in only one select direction to help define and identify the unique pattern generated by the active landing marker 100. Further in an example, the cover panel 104 is made from a translucent white polarized material. In yet another example, the cover panel 104 is made from a translucent amber polarized material. In still another embodiment, the cover panel 104 is made from a translucent polarized material with near infrared (NIR) properties that emits NIR light in response to the NIR radiated energy from the energy source.

As discussed above, the cover panel may include polarizing material. Undesired reflections captured in a field of view of an image sensor (camera) on vehicles can cause issues when trying to identify a landing marker and implement a MBL system. This may occur, for example, as a result of bright sunlight reflecting off of bright regions or light sections of the active landing marker 100. The polarized material in the cover panel addresses this issue. In one example, the polarized material includes a liner polarizing film 103 such as, but not limited to, a Dichroic thin film. In another example wire-grid polarizers may be used. The polarizing material absorb incident light oscillating in all but one plane, its polarizing axis, yielding linear polarization. Liner polarization of a randomly polarized light source further may reduce the intensity of the source by fifty to sixty five percent. This makes the polarization material effective in evening out illumination levels within the filed of illumination region of the active landing marker 100. The cover panel 104 may further include one of an anti-glare coating 107 and a scratch-resistant covering 109.

The energy source in the example illustrated in Figure 1 are energy producing elements such as, but not limited to, a plurality of light emitting diodes (LEDs) 111, 112 and 113. The LEDS 111, 112 and 113, in this example, are positioned within the cavity 105 of the housing 102. In the LED example, the LEDS 111, 112 and 113 are coupled to an LED driver 114 to regulate power to one or more strings of LEDs 111, 112 and 113 from a power source 118.

In one example, different LEDS 111, 112 and 113 transmit different color light. For example, LEDS 111 may be configured to transmit white light, LEDS 112 may be configured to transmit amber light and LEDS 113 may be configured to transmit RED light or GREEN light or BLUE light or may be a combination of the RGB light. Further in an example, the cover panel 104 may be made of a translucent white or amber polycarbonate, or other material like hardened glass.

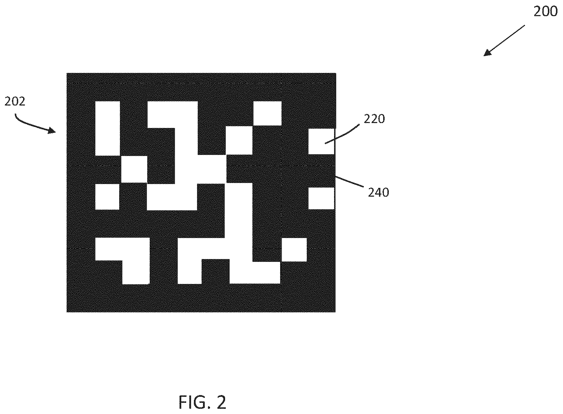

Also illustrated in Figure 1 is a marker panel 200 that is received within the cavity 105 of the housing 102 adjacent the cover panel 104 in this example. The marker panel 200, as best illustrated in Figure 2, defines the unique pattern 202 of the active landing marker 100 that is used by the vehicle to identify a location, such as a landing site, and provide a reference for precision landings. The unique pattern 202 is made from a plurality of energy transmission sections 220 and a plurality of energy absorbing sections 240. In the Example of Figure 1, the energy transmission sections 220 are translucent sections that allow energy generated from the LEDS 113, 112 and 111 to pass through and the energy absorbing sections 240 are made from a plurality of opaque sections that blocks light from the LEDS 113, 112 and 111 from passing through. The energy transmitted through the energy transmission sections 220 passes through the cover panel 104 that includes polarized material.

In one example, the unique pattern 202 is an ArUco pattern. The energy absorbing sections 240 of the marker panel 200 provide a binary zero of the ArUco pattern while the energy transmission sections 220 provide a binary one of the ArUco pattern. In an example, a landing identification site system in a vehicle, identifies a desired landing sited based on a detected ArUco pattern and a MBL system of a vehicle uses the unique ArUco pattern of one or more active landing markers 100 to accomplish a precision landing of the vehicle.

In an example, the unique pattern 202 of the marker panel 200 of the active landing marker 100 is designed to be changed. In one example, a different marker panel 200 with a different unique pattern 202 is used to just replace a current marker panel 200. In another example, the marker panel 200 may be designed to selectively reconfigure its unique pattern. For example, the marker panel may be made from a plurality of dimmable glass sections or liquid crystal plates that selectively block or allow the transmission of light. In a dimmable glass section example, suspended particle devices (SPDs) that include rod like nano-scale particles are suspended in a liquid between pieces of glass or plastic. The suspended particles are randomly organized in the absence of a voltage. The randomly organized particles block and absorb energy making the section opaque. When a voltage is applied, the suspended particles align letting the energy to pass through. In another example a mechanical energy absorbing shutter system may be used to modify select sections of the marker panel to achieve a desired unique pattern 202.

In examples that include changeable sections in a marker panel, a controller 120 may be used to selectively apply voltage from the power source 118 to select sections to create a desired unique pattern in the marker panel 200. The controller 120 may be in communication with a memory 122 that stores operating instructions implemented by the controller 120. Further, the controller 120 may be in communication with a wireless communication unit 124. The wireless communication unit 124 may be used to receive remote operating signals relating to a desired unique pattern in the marker panel 200 or broadcast a current unique pattern to a remote location such as a vehicle seeking the landing site or a ground station.

In general, the controller 120 may include any one or more of a processor, microprocessor, a digital signal processor (DSP), an application specific integrated circuit (ASIC), a field program gate array (FPGA), or equivalent discrete or integrated logic circuitry. In some example embodiments, controller 120 may include multiple components, such as any combination of one or more microprocessors, one or more controllers, one or more DSPs, one or more ASICs, one or more FPGAs, as well as other discrete or integrated logic circuitry. The functions attributed to the controller 120 herein may be embodied as software, firmware, hardware or any combination thereof. The controller 120 may be part of a system controller or a component controller. The memory 122 may include computer-readable operating instructions that, when executed by the controller 120 provides functions of creating desired unique patterns in the marker panel 200. The computer readable instructions may be encoded within the memory 122. Memory 122 is an appropriate non-transitory storage medium or media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

It may further be desired to change the wavelength of the energy transmitted from the active landing marker. This may be due to the changing of environmental conditions. The controller 120 acts as a switch, switching between LEDs 112 or LEDS 111 or LEDs 113 to achieve a desired radiated energy of a select wavelength. Other systems to change the wavelength of the radiated energy may be used including but not limited to, filtering through a shutter system. The radiated energy 110 from the active landing marker 100 may be set at a select wavelength for a given environmental condition. The given environmental condition is determined by at least one sensor 126 and may in addition be determined through a remote communication signal received through the wireless communication unit 124. An example of types of sensors 126 that may be used includes, but is not limited to, light sensors, temperature sensor, moisture sensors, and smoke sensors etc.

Further, the luminosity of the radiated energy from the active landing marker 100 may be electronically controlled in an example taking into consideration the current ambient light available and glare. This may be accomplished by the controller 120 with luminous flux sensor signals from the at least one sensor 126.

In an example, an active landing marker 100 may be configured to radiate white light based on a luminous flux sensor input from the at least one sensor 126. Each energy transmission section 220 of the unique pattern 202 in this example is optically illuminated with white light. The energy absorbing sections 240 may include non-reflective black sections. The luminosity of the light may be electronically controlled with respect to the ambient light and glare with the luminous flux sensors input. White light may be used for day and night landings during clear visibility environmental conditions or clear visual meteorological conditions (VMC). The vehicle may use a low light electro-optical camera for the MBL system.

In another example, yellow light may be used with active landing marker 100. In one example, filtering techniques may be used on generated white and amber light to radiate yellow light of 580 nm wavelength. Yellow light may be used during day and night landings in low visibility landing conditions under instrument meteorological conditions (IMC).

In another example, more than one color of light maybe used in generating the unique pattern. In one example, RED color LEDS, BLUE color LEDS, GREEN color LEDS or a combination of the RGB color LEDS are used. For example, the marker panel 200 may form a chroma-tag code with the sections of the marker panel 200 optically illuminated with specific color light sources which may be accomplished with filtering and/or polarization techniques or different LEDS 111, 112 and 113. This configuration may be used for both day and night landings in clear and low visibility landing conditions under VMC. A color code of the active landing marker or a group of active landing markers also provides more options for encoded data which provides an enhanced security element.

In still another example, the active landing marker 100 is designed to radiate energy in the NIR spectrum. In one example, energy transmission sections 220, of the unique pattern, are optically illuminated with NIR light greater than 850 nm wavelength using filters and/or coatings and polarization techniques. This configuration works well for night landings in very low visibility landing conditions under instrument meteorological conditions (IMC). The vehicle would use a near infrared camera in capturing the unique pattern from the active landing marker.

Other types of energy sources beside LEDs may be used to create a desired unique pattern with the marker panel 200. For example, heating sources may be used to generate far infrared energy, such as hot surface far infrared (FIR) energy, that are used in generating the desired unique pattern. This type of active marker-based landing system may be useful when used in inclement weather conditions where visible light is hard to detect.

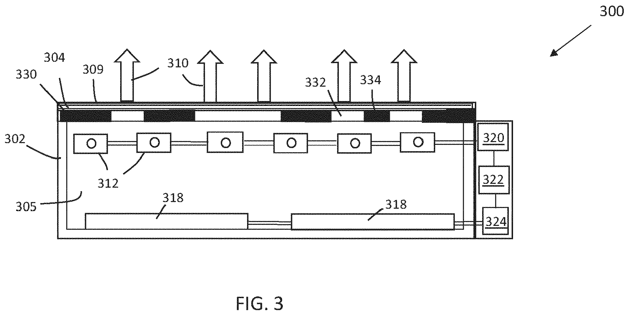

An example of an active landing marker 300 that include heat sources 312 to generate FIR energy is illustrated in Figure 3. The active landing marker 300 includes a housing 302. A cover panel 304 is used to form an enclosed cavity 305 with the housing 302. In one example, the cover panel 304 is made of thermal conducting material that radiates thermal energy 310 from the heat sources 312 that is located within the cavity 305 of active landing marker 300. The cover panel 304 may further include a scratch-resistant covering 309.

In one example, the heat sources 312 are ceramic cartridge heaters. A controller 320, such as a thermal controller, may control energy from an energy source 322 to regulate the generated FIR energy from the heat sources 312. This example further includes thermoelectric cooling pads 318 that are spaced a distance from the heat sources 312. The thermoelectric cooling pads 318 transfers heat out of the cavity 305 to a frame of the housing 302 to regulate the temperature within the cavity 305 therein preventing the overheating of components and a consistent unique pattern. A controller 324, such as a thermal controller 324 may control energy from an energy source 322 to regulate the heat transfer provided by the thermal controller 324.

In one example, a marker panel 330 is used that includes energy transmission sections 332 of thermally conductive material and energy absorbing sections 334 of thermal absorbing materials to generate the unique pattern provided by the active landing marker 300. In another example, the heat sources 312 themselves are arranged in a desired unique pattern and are positioned adjacent the cover panel 304 to generate the unique pattern through the cover panel 304.

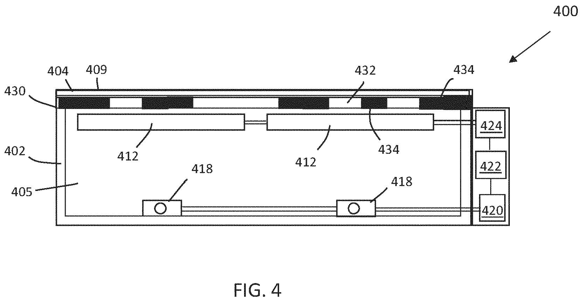

Another example of an active landing marker 400 is illustrated in Figure 4. In this example, the unique pattern is made in the marker panel 430 with cold sections. The unique pattern can be read with thermal image capturing device in a vehicle. Active landing marker 400 includes thermoelectric cooling pads 412 used to cool material in select energy transmission sections 432 of the marker panel 430. The active landing marker 400 includes a housing 402. A cover panel 404 is used to form an enclosed cavity 405 with the housing 402. In one example, the cover panel 404 is made of thermal conducting material. The thermoelectric cooling pads 412 are located within the cavity 405 of the active landing marker 400. The cover panel 404 may further include a scratch-resistant covering 409.

The marker panel 430 includes the energy transmission sections 432 of thermally conductive material that are cooled by the thermoelectric cooling pads 412 and energy absorbing sections 434 of thermal absorbing materials that thermally insolates the thermoelectric cooling pads to generate the unique pattern provided by the active landing marker 400.

In one example, heat sources 418 are included in the cavity 405 of active landing marker 400 to regulate the temperature within the cavity 405 when needed. A controller 420, such as a thermal controller, may control energy from an energy source 422 to regulate the heat generated by the heat sources 418. Further controller 424, such as a thermal controller may control energy from the energy source 422 to regulate the cooling of the thermoelectric cooling pads 412. In another example, a single controller may be used to control both the thermoelectric cooling pads 412 and the heat sources 418.

Examples of Figures 3 and 4 discussed above, provide active landing markers 300 and 400 that provide far infrared/thermal radiated energy signals. Each section 332, 334, 432, and 434 of respective marker panels 330 and 430 of the active landing markers 300 and 400 are thermally controlled. The thermal absorbing materials in the energy absorbing sections 334 and 434 are highly efficient thermal barriers designated considering the environmental temperature and other variations. The active landing markers 300 and 400 may be used in very low visibility conditions in either day or night. The vehicle would include thermal camera for the MBL.

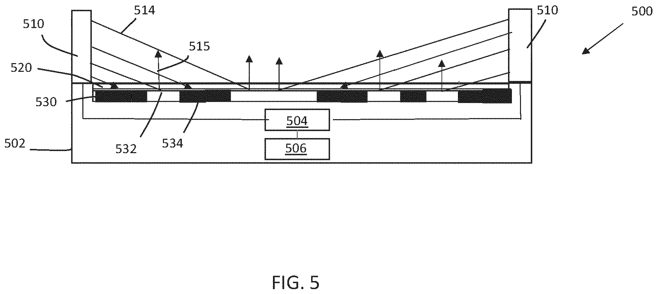

Another example the active landing marker 500 is shown in Figure 5. In this example, within a housing 502 is a power source 506 and a controller 504. The controller 504 in an example, is a simple switch that selectively provides power to energy generating sources 510. The radiated energy from the energy generating sources 510 is projected or directed to a marker panel 530 with a unique pattern is configured of energy absorbing sections 534 and energy reflection sections 532. The energy absorbing sections 534 absorb the radiated energy 514 and while the energy reflection sections 532 reflect the radiated energy 514. The cover 520, made from a polarizing material, directs the reflected radiated energy 515 from the energy reflection section 532 to define the unique pattern to be detected by a camera imaging system in a vehicle. In one example, the external energy generating sources 510 are positioned at corners of the active landing marker 500. This type of active landing marker 500 provides good visibility of the unique pattern at night and during low visibility conditions.

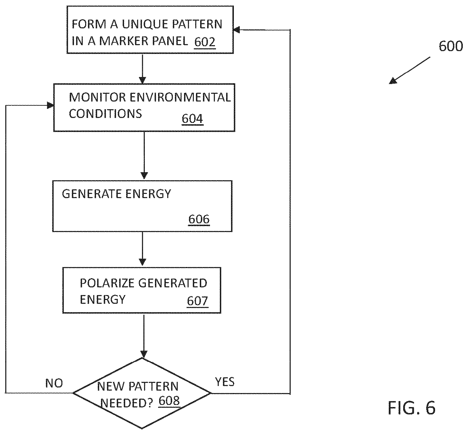

Referring to Figure 6, an active landing marker flow diagram 600 is illustrated. The flow diagram 600 is provided as a series of sequential blocks. The sequence may occur in a different order or even in parallel in other embodiments. Hence, embodiments are not limited to the sequential order of the blocks as set out in Figure 6.

Flow diagram 600 starts at block 602 where a unique pattern is formed in a marker panel. As discussed above, the unique pattern is made of with a plurality of energy absorbing sections and a plurality of energy transmission sections. The material that the sections are made is dependent on the type of energy signal used to generate the active unique pattern. The unique pattern is a pattern recognized by a landing identification system of a vehicle and a MBL system of the vehicle uses one or more of the unique patterns as references to accomplish a precision landing of the vehicle.

The active landing marker may include a function that changes the energy signals generated based on current environmental conditions. In this example, the environmental conditions are monitored at block 604. This may be done with the use of one or more sensors and a controller that selects the energy signals based on signals from the one or more sensors. In another embodiment, the current environmental conditions are provided from a remote source through a wireless communication unit.

Energy is generated at block 606. The type of energy depends on the environmental conditions in an example. The type of energy may be selected based on wavelength best suited to convey the unique pattern for the current environmental conditions. This may be done, for example, by switching between energy sources or switching between different LEDs or by filtering techniques as discussed above. As also discussed above the energy is either passed through or reflected off of the energy transmission sections and through a cover of polarizing material at block (607) to radiate the energy in the unique pattern.

At block 608 it is determined if a new unique pattern is needed. This may come based on remote instructions received at the controller via the wireless communication unit. If a new pattern is not needed, the process continues at block 604 monitoring for environmental conditions. If new pattern is needed, a new unique pattern is formed in the marker panel at block 602.

Although specific embodiments have been illustrated and described herein, it will be appreciated by those of ordinary skill in the art that any arrangement, which is calculated to achieve the same purpose, may be substituted for the specific embodiment shown as long as the result is covered by the appended claims. This application is intended to cover any adaptations or variations of the present invention within the scope of the appended claims. Therefore, it is manifestly intended that this invention be limited only by the claims.

## Claims

1. An active landing marker (100, 300, 400, 500) comprising:
a housing (102, 302, 402, 502):
a cover panel (104, 304, 404, 520) coupled to the housing, the cover panel made of polarized translucent material;
a marker panel (200, 330, 430, 530) including a plurality of selectively positioned energy absorbing sections (240, 334, 434, 534) and a plurality of energy transmission sections (220, 332, 432, 532);
energy sources (111, 112, 113, 312, 412, 510) positioned to direct energy to the marker panel (200, 330, 430, 530), energy radiated from the energy sources (111, 112, 113, 312, 412, 510) being absorbed by the energy absorbing sections (240, 334, 434, 534) of the marker panel (200, 330, 430, 530) and directed out of the cover panel (104, 304, 404, 520) by the energy transmission sections (220, 332, 432, 532) to generate an active signal marker having a unique marker pattern, the active signal marker aiding in the landing of vehicles;
a sensor configured to sense an environmental condition; and
a controller to selectively provide power to the energy sources,
wherein the controller is configured to switch between energy sources based on the current environmental condition.

2. The active landing marker (100, 300, 400, 500) of claim 1, wherein the active signal marker is an Augmented Reality University of Cordoba (ArUco) marker, the energy absorbing sections (240, 334, 434, 534) of the marker panel providing a binary zero of the ArUco marker and the energy transmission sections (220, 332, 432, 532) providing a binary one of the ArUco marker.

3. The active landing marker (100, 300, 400, 500) of claim 2, wherein the energy absorbing sections (240, 334, 434, 534) and the energy transmission sections (220, 332, 432, 532) of the marker panel (200, 330, 430, 530) form the ArUco marker pattern.

4. The active landing marker (100, 300, 400, 500) of claim 1, wherein the energy absorbing sections (240, 334, 434, 534) of the marker panel (200, 330, 430, 530) are non-reflective black sections.

5. The active landing marker (100, 300, 400, 500) of claim 1, wherein the polarized translucent material of the cover panel (104, 304, 404, 520) is a translucent white polarized material that is configured to emit white light in response to the radiated energy of the energy source.

6. The active landing marker (100, 300, 400, 500) of claim 1, wherein the polarized translucent material of the cover panel (104, 304, 404, 520) is a translucent amber polarized material that is configured to emit amber light in response to the radiated energy from the energy source (111, 112, 113, 312, 412, 510).

7. The active landing marker (100, 300, 400, 500) of claim 1, wherein the polarized translucent material of the cover panel (104, 304, 404, 520) is a translucent near infrared (NIR) polarized material that is configured to emit NIR light in response to the radiated energy from the energy source (111, 112, 113, 312, 412, 510).

8. A method of generating an active landing marker (100, 300, 400, 500), the method comprising:
determining a current environmental condition by at least one sensor;
forming a unique pattern in a marker panel (200, 330, 430, 530) with a plurality of energy absorbing sections (240, 334, 434, 534) and a plurality of energy transmission sections (220, 332, 432, 532);
selectively providing power to a plurality of energy sources to generate energy that is absorbed by the energy absorbing sections and transmitted from the energy transmission sections (220, 332, 432, 532);
polarizing the transmitted energy to define the unique pattern with the transmitted energy that aids in the landing of vehicles during varying environmental conditions; and
switching between energy sources based on the current environmental condition.

9. The method of claim 8, further comprising:
changing the unique pattern in the marker panel.

## Patentansprüche

1. Aktiver Landemarker (100, 300, 400, 500), umfassend:
ein Gehäuse (102, 302, 402, 502);
eine Abdeckplatte (104, 304, 404, 520), die mit dem Gehäuse gekoppelt ist, wobei die Abdeckplatte aus polarisiertem lichtdurchlässigem Material hergestellt ist;
eine Markerplatte (200, 330, 430, 530), die eine Vielzahl von selektiv positionierten energieabsorbierenden Abschnitten (240, 334, 434, 534) und eine Vielzahl von Energieübertragungsabschnitten (220, 332, 432, 532) umfasst;
Energiequellen (111, 112, 113, 312, 412, 510), die dazu positioniert sind, Energie auf die Markerplatte (200, 330, 430, 530) zu lenken, wobei von den Energiequellen (111, 112, 113, 312, 412, 510) ausgestrahlte Energie durch die energieabsorbierenden Abschnitte (240, 334, 434, 534) der Markerplatte (200, 330, 430, 530) absorbiert wird und durch die Energieübertragungsabschnitte (220, 332, 432, 532) aus der Abdeckplatte (104, 304, 404, 520) hinausgelenkt wird, um einen aktiven Signalmarker zu erzeugen, der ein eindeutiges Markermuster aufweist, wobei der aktive Signalmarker bei der Landung von Fahrzeugen hilft;
einen Sensor, der dazu konfiguriert ist, eine Umgebungsbedingung zu erfassen; und
eine Steuerung, um selektiv Strom an die Energiequellen bereitzustellen,
wobei die Steuerung dazu konfiguriert ist, auf Basis der aktuellen Umgebungsbedingung zwischen Energiequellen umzuschalten.

2. Aktiver Landemarker (100, 300, 400, 500) nach Anspruch 1, wobei der aktive Signalmarker ein Augmented Reality University of Cordoba (ArUco) -Marker ist, wobei die energieabsorbierenden Abschnitte (240, 334, 434, 534) der Markerplatte eine binäre Null des ArUco-Markers bereitstellen und die Energieübertragungsabschnitte (220, 332, 432, 532) eine binäre Eins des ArUco-Markers bereitstellen.

3. Aktiver Landemarker (100, 300, 400, 500) nach Anspruch 2, wobei die energieabsorbierenden Abschnitte (240, 334, 434, 534) und die Energieübertragungsabschnitte (220, 332, 432, 532) der Markerplatte (200, 330, 430, 530) das ArUco-Markermuster ausbilden.

4. Aktiver Landemarker (100, 300, 400, 500) nach Anspruch 1, wobei die energieabsorbierenden Abschnitte (240, 334, 434, 534) der Markerplatte (200, 330, 430, 530) nicht reflektierende schwarze Abschnitte sind.

5. Aktiver Landemarker (100, 300, 400, 500) nach Anspruch 1, wobei das polarisierte, lichtdurchlässige Material der Abdeckplatte (104, 304, 404, 520) ein lichtdurchlässiges weißes polarisiertes Material ist, das dazu konfiguriert ist, weißes Licht als Antwort auf die ausgestrahlte Energie der Energiequelle zu emittieren.

6. Aktiver Landemarker (100, 300, 400, 500) nach Anspruch 1, wobei das polarisierte, lichtdurchlässige Material der Abdeckplatte (104, 304, 404, 520) ein lichtdurchlässiges bernsteinfarbenes polarisiertes Material ist, das dazu konfiguriert ist, bernsteinfarbenes Licht als Antwort auf die von der Energiequelle (111, 112, 113, 312, 412, 510) ausgestrahlte Energie zu emittieren.

7. Aktiver Landemarker (100, 300, 400, 500) nach Anspruch 1, wobei das polarisierte, lichtdurchlässige Material der Abdeckplatte (104, 304, 404, 520) ein lichtdurchlässiges nahe infrarotes (NIR) polarisiertes Material ist, das dazu konfiguriert ist, NIR-Licht als Antwort auf die von der Energiequelle (111, 112, 113, 312, 412, 510) ausgestrahlte Energie zu emittieren.

8. Verfahren zum Erzeugen eines aktiven Landemarkers (100, 300, 400, 500), das Verfahren umfassend:
Bestimmen einer aktuellen Umgebungsbedingung durch mindestens einen Sensor;
Ausbilden eines eindeutigen Musters in einer Markerplatte (200, 330, 430, 530) mit einer Vielzahl von energieabsorbierenden Abschnitten (240, 334, 434, 534) und einer Vielzahl von Energieübertragungsabschnitten (220, 332, 432, 532);
selektives Bereitstellen von Strom an eine Vielzahl von Energiequellen, um Energie zu erzeugen, die durch die energieabsorbierenden Abschnitte absorbiert und von den Energieübertragungsabschnitten (220, 332, 432, 532) übertragen wird;
Polarisieren der übertragenen Energie, um das eindeutige Muster mit der übertragenen Energie zu definieren, das bei dem Landen von Fahrzeugen während sich verändernder Umgebungsbedingungen hilft; und
Umschalten zwischen Energiequellen auf Basis der aktuellen Umgebungsbedingung.

9. Verfahren nach Anspruch 8, ferner umfassend:
Ändern des eindeutigen Musters in der Markerplatte.

## Revendications

1. Marqueur d'atterrissage actif (100, 300, 400, 500) comprenant :
un boîtier (102, 302, 402, 502) ;
un panneau de couverture (104, 304, 404, 520) couplé au boîtier, le panneau de couverture étant constitué d'un matériau translucide polarisé ;
un panneau marqueur (200, 330, 430, 530) comportant une pluralité de sections d'absorption d'énergie (240, 334, 434, 534) disposées de manière sélective et une pluralité de sections de transmission d'énergie (220, 332, 432, 532) ;
des sources d'énergie (111, 112, 113, 312, 412, 510) disposées pour diriger l'énergie vers le panneau marqueur (200, 330, 430, 530), l'énergie rayonnée par les sources d'énergie (111, 112, 113, 312, 412, 510) étant absorbée par les sections d'absorption d'énergie (240, 334, 434, 534) du panneau marqueur (200, 330, 430, 530) et dirigée vers l'extérieur du panneau de couverture (104, 304, 404, 520) par les sections de transmission d'énergie (220, 332, 432, 532) afin de générer un marqueur de signal actif ayant un motif de marqueur unique, le marqueur de signal actif aidant à l'atterrissage des véhicules ;
un capteur configuré pour détecter une condition environnementale ; et
un contrôleur destiné à mettre à disposition de manière sélective de la puissance aux sources d'énergie,
dans lequel le contrôleur est configuré pour basculer entre les sources d'énergie en fonction de la condition environnementale actuelle.

2. Marqueur d'atterrissage actif (100, 300, 400, 500) de la revendication 1, dans lequel le marqueur de signal actif est un marqueur de Réalité Augmentée, Université de Cordoue (ArUco), les sections d'absorption d'énergie (240, 334, 434, 534) du panneau marqueur mettant à disposition un 0 binaire du marqueur ArUco et les sections de transmission d'énergie (220, 332, 432, 532) mettant à disposition un 1 binaire du marqueur ArUco.

3. Marqueur d'atterrissage actif (100, 300, 400, 500) de la revendication 2, dans lequel les sections d'absorption d'énergie (240, 334, 434, 534) et les sections de transmission d'énergie (220, 332, 432, 532) du panneau marqueur (200, 330, 430, 530) forment le motif de marqueur ArUco.

4. Marqueur d'atterrissage actif (100, 300, 400, 500) de la revendication 1, dans lequel les sections d'absorption d'énergie (240, 334, 434, 534) du panneau marqueur (200, 330, 430, 530) sont des sections noires non réfléchissantes.

5. Marqueur d'atterrissage actif (100, 300, 400, 500) de la revendication 1, dans lequel le matériau translucide polarisé du panneau de couverture (104, 304, 404, 520) est un matériau blanc translucide polarisé qui est configuré pour émettre une lumière blanche en réponse à l'énergie rayonnée par la source d'énergie.

6. Marqueur d'atterrissage actif (100, 300, 400, 500) de la revendication 1, dans lequel le matériau translucide polarisé du panneau de couverture (104, 304, 404, 520) est un matériau ambré translucide polarisé qui est configuré pour émettre une lumière ambrée en réponse à l'énergie rayonnée par la source d'énergie (111, 112, 113, 312, 412, 510).

7. Marqueur d'atterrissage actif (100, 300, 400, 500) de la revendication 1, dans lequel le matériau translucide polarisé du panneau de couverture (104, 304, 404, 520) est un matériau translucide proche infrarouge (NIR) polarisé qui est configuré pour émettre une lumière NIR en réponse à l'énergie rayonnée par la source d'énergie (111, 112, 113, 312, 412, 510).

8. Procédé de génération d'un marqueur d'atterrissage actif (100, 300, 400, 500), le procédé comprenant :
la détermination d'une condition environnementale actuelle à l'aide d'au moins un capteur ;
la formation d'un motif unique dans un panneau marqueur (200, 330, 430, 530) avec une pluralité de sections d'absorption d'énergie (240, 334, 434, 534) et une pluralité de sections de transmission d'énergie (220, 332, 432, 532) ;
la mise à disposition de manière sélective de la puissance à une pluralité de sources d'énergie pour générer une énergie qui est absorbée par les sections d'absorption d'énergie et transmise par les sections de transmission d'énergie (220, 332, 432, 532) ;
la polarisation de l'énergie transmise pour définir le motif unique avec l'énergie transmise qui aide à l'atterrissage des véhicules dans des conditions environnementales variées ; et
le basculement entre les sources d'énergie en fonction de la condition environnementale actuelle.

9. Procédé de la revendication 8, comprenant en outre :
la modification du motif unique dans le panneau marqueur.
